(19) Europäisches Patentamt
European Patent Office
Office européen des brevets

(11) Numéro de publication: **0 550 300 B1**

# (12) FASCICULE DE BREVET EUROPEEN

(45) Date de publication de fascicule du brevet: **08.03.95**

(51) Int. Cl.⁶: **G01B 11/24**

(21) Numéro de dépôt: **92403280.8**

(22) Date de dépôt: **04.12.92**

## (54) Capteur optique compact et à haute résolution pour l'analyse de formes tridimensionnelles.

(30) Priorité: **30.12.91 FR 9116305**

(43) Date de publication de la demande:
**07.07.93 Bulletin 93/27**

(45) Mention de la délivrance du brevet:
**08.03.95 Bulletin 95/10**

(84) Etats contractants désignés:
**BE DE DK ES GB GR IE IT LU NL PT**

(56) Documents cités:
**WO-A-90/09561**
**FR-A- 2 627 047**

**PATENT ABSTRACTS OF JAPAN vol. 9, no. 221 (P-386)(1944) 7 Septembre 1985 & JP-A-60 079204**

(73) Titulaire: **SA KREON INDUSTRIE**
**Rue Nicolas Appert**
**F-87021 Limoges (FR)**

(72) Inventeur: **Cosnard, Eric**
**Barbe d'Or, 4107**
**F-31180 La Peyrouse-Fossat (FR)**
Inventeur: **Steuperaert, Jan**
**Les régourdes**
**F-31460 Le Faget (FR)**

(74) Mandataire: **Rodhain, Claude et al**
**Cabinet Claude Rodhain S.A.**
**3, rue Moncey**
**F-75009 Paris (FR)**

EP 0 550 300 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention concerne l'acquisition et la numérisation en trois dimensions de la forme de pièces gauches quelconques au moyen de systèmes comportant un capteur optique avec une source de rayonnement laser et une ou plusieurs caméras analysant la trace formée par le faisceau laser sur l'objet à étudier.

Une telle technique est décrite en détail, notamment dans les FR-A-2 627 047, FR-A-2 642 833 et FR-A-2 629 198, qui appartiennent à la Demanderesse.

Plus précisément, cette technique prévoit d'engendrer un ≪ plan laser ≫, c'est-à-dire un faisceau lamellaire sectoral de très faible épaisseur, mais dont la largeur lui permet de couvrir la totalité de l'objet à analyser, avec une ou deux caméras regardant ce plan sous deux incidences différentes. L'ensemble est placé à l'extrémité d'un bras manipulateur mobile, par exemple celui d'une machine-outil à commande numérique, afin de réaliser un balayage de la pièce par le plan laser et permettre ainsi l'acquisition progressive, dans les trois dimensions, de la surface de la pièce. Le balayage peut être réalisé aussi bien par pivotement que par translation du capteur par rapport à la pièce ; par ailleurs, le mouvement de balayage peut être obtenu également en maintenant le capteur fixe et en déplaçant la pièce par rapport à ce dernier, la pièce étant dans ce cas par exemple montée sur une table à mouvements croisés télécommandée.

Jusqu'à présent, les capteurs utilisés pour mettre en oeuvre cette technique étaient relativement encombrants, fragiles et complexes.

L'un des buts de l'invention est de proposer une structure de capteur qui permette de miniaturiser celui-ci dans des proportions importantes, tout en conservant et même en accroissant sa précision et sa résolution (la ≪ résolution ≫ étant la taille du pixel propre au système et la ≪ précision ≫ étant celle que l'on obtient en tenant compte des étapes de numérisation et de reconstitution ; la précision de position, peut être, comme on le verra, meilleure que le pixel compte tenu des divers traitements effectués lors de l'étape d'analyse de la trace laser).

L'intérêt d'un capteur miniaturisé, outre la commodité qu'il procure, est de permettre son utilisation même dans un espace très réduit, pour des pièces de petites dimensions, des surfaces peu accessibles, etc., c'est-à-dire chaque fois que l'on veut une grande précision dans un champ réduit.

Mais dans ce cas le capteur va se trouver beaucoup plus près de la pièce à analyser, et il va alors se poser un certain nombre de problèmes nouveaux, tout particulièrement celui de la profondeur de champ, qui va se dégrader d'autant plus que le capteur est rapproché de l'objet.

Actuellement, les capteurs à laser He-Ne sont réglés avec une focalisation à environ 1 m de la source, donc avec un recul important (qui, de toute façon, est indispensable compte tenu de l'encombrement relativement important du laser hélium-néon et des différents organes qui lui sont associés).

Ce recul important permet, grâce à une focalisation à longue distance de former une trace extrêmement fine avec une profondeur de champ importante, avec, typiquement, un faisceau lamellaire d'épaisseur inférieure à 0,2 mm sur une profondeur de champ de 100 mm.

En outre, le faisceau lamellaire étant obtenu par des moyens statiques (généralement une lentille cylindrique), l'étalement du faisceau, combiné au recul important, fait que la densité locale d'énergie est relativement faible (de l'ordre de 1 $\mu W/mm^2$), ce qui rend le faisceau sans danger pour l'opérateur.

En revanche, si l'on peut miniaturiser le capteur (grâce notamment à l'intégration d'une diode laser en remplacement du laser He-Ne), et si l'on ne peut pas ou l'on ne veut pas reculer celui-ci par rapport à l'objet, va se poser le problème de la profondeur de champ en raison de la focalisation à une distance beaucoup plus courte (typiquement 10 cm au lieu de 1 m), avec une incidence corrélative sur la finesse de la trace, donc sur la résolution et sur la précision finale.

En outre, la densité énergétique, qui varie comme l'inverse de la distance, va augmenter dans des proportions très importantes, rendant dangereux le faisceau en cas de rencontre avec l'oeil d'un opérateur au voisinage de l'objet.

Le but de l'invention est de conserver les avantages des capteurs actuels malgré la miniaturisation et le recul physique beaucoup plus faible par rapport à l'objet.

Essentiellement, l'invention consiste à créer un recul virtuel de la source à l'intérieur du capteur afin de se placer sensiblement dans les mêmes conditions que celles d'un faisceau à focalisation longue, compensant ainsi le faible recul physique imposé par la configuration de l'ensemble capteur-objet.

A cet effet, le capteur de l'invention, qui comporte, de manière en elle-même connue et décrite par exemple dans les trois brevets précités, une source laser produisant un faisceau plan lamellaire illuminant la surface d'un objet de manière à produire sur ce dernier une trace lumineuse incidente curviligne analysée par au moins une caméra vidéo produisant une information convertie en données numériques représentatives de coordonnées de pixels, est caractérisé par une boîte à lumière comprenant, dans un même boîtier

placé au-dessus de l'objet à analyser et à faible distance de celui-ci : ladite source laser, produisant un faisceau rectiligne collimaté ; des moyens optiques pour transformer ce faisceau rectiligne en un faisceau plan lamellaire ; et des moyens d'allongement du trajet optique du faisceau, comprenant deux miroirs plans fixes, disposés en vis-à-vis de manière à produire une pluralité de réflexions entre un point d'entrée et un point de sortie du faisceau. De cette manière, on compense le faible recul matériel entre le boîtier et l'objet par un recul optique virtuel et on accroît ainsi corrélativement la profondeur de champ de la région utile du faisceau plan lamellaire en sortie du boîtier.

Avantageusement, les points d'entrée et de sortie comprennent des moyens optiques de réglage d'incidence de faisceau, de manière à ajuster le nombre de réflexions entre les deux miroirs en vis-à-vis, et les moyens optiques pour transformer le faisceau rectiligne en un faisceau plan lamellaire sont des moyens statiques.

Ce capteur peut en particulier comprendre, en outre, au moins un bloc détecteur attenant à la boîte à lumière et pourvu d'un organe photoélectrique analyseur d'image et de moyens formant objectif, placés devant cet organe analyseur d'image.

Dans ce cas, selon un aspect avantageux de l'invention, il est en outre prévu des moyens de bascule relative de l'organe analyseur d'image par rapport aux moyens formant objectif.

Selon un autre aspect avantageux de l'invention, il est en outre prévu un circuit électronique d'extraction de l'information représentative de la position de la trace du faisceau laser sur chaque ligne d'image délivrée par l'organe analyseur d'image, ce circuit comprenant : un étage intégrateur, recevant en entrée un signal électrique représentatif de l'intensité lumineuse reçue, variant en fonction de la position considérée sur la ligne analysée, et délivrant en sortie un signal, croissant, représentatif de l'énergie lumineuse cumulée reçue ; un étage diviseur, recevant en entrée le signal d'énergie délivré par l'étage intégrateur ; un étage à retard, recevant en entrée le signal d'énergie délivré par l'étage intégrateur ; et un étage comparateur, recevant sur chacune de ses entrées les signaux de sortie respectifs de l'étage diviseur et de l'étage à retard, le basculement de cet étage comparateur définissant, au cours du balayage de la ligne d'image, la position du milieu de la trace du faisceau laser.

On va maintenant décrire un exemple de réalisation de l'invention, en référence aux dessins annexés.

La figure 1 est une vue frontale, en élévation, d'un capteur selon l'invention avec une boîte à lumière et deux détecteurs attenants, l'ensemble étant monté à l'extrémité d'un bras manipulateur mobile.

La figure 2 est une vue latérale, selon II-II de la figure 1, de ce même ensemble.

La figure 3 est une vue en coupe schématique de la boîte à lumière du capteur selon l'invention.

La figure 4 est une vue en perspective montrant les divers organes optiques de cette boîte à lumière.

La figure 5 est une vue en coupe schématique de l'un des détecteurs des capteurs de l'invention.

La figure 6 est une coupe schématique de l'ensemble objectif-dispositif analyseur du détecteur de la figure 5.

La figure 7 est un schéma montrant la manière dont les défauts de netteté et de profondeur de champ sont compensés par un système de bascule de l'organe photoélectrique du détecteur.

La figure 8 illustre la forme générale du signal vidéo d'une ligne de balayage en sortie de l'organe photoélectrique.

La figure 9 est le schéma électronique d'un circuit d'analyse de ce signal permettant l'extraction de l'information représentative de la position de la trace du faisceau laser.

La figure 10 est un chronogramme montrant divers signaux produits au sein du circuit de la figure 9.

Les figures 11 et 12 illustrent une variante numérique de mise en oeuvre du système d'analyse du signal, dont la figure 9 illustrait une version analogique.

Sur la figure 1, on a représenté le capteur de l'invention, désigné de façon générale par la référence 1.

Ce capteur est situé à proximité d'une pièce à analyser 2 dont on cherche à acquérir et numériser la forme, gauche, de la surface. Le capteur 1 est monté à l'extrémité d'un bras manipulateur 3, par exemple celui d'une machine-outil à commande numérique, et il comporte un élément central 100, qui est une boîte à lumière émettant un faisceau laser 4 qui est un faisceau plan lamellaire, c'est-à-dire de faible épaisseur (cf. figure 1) mais de largeur importante (cf. figure 2). L'impact du faisceau avec la surface de la pièce produit une trace lumineuse curviligne 5, qui est analysée par un ou (de préférence) deux détecteurs 200 comportant chacun une caméra et des circuits électroniques de numérisation et d'analyse de l'image de la caméra. Ces deux détecteurs 200 sont avantageusement réalisés sous forme d'éléments attenants à la boîte à lumière 100 et disposés de part et d'autre de celle-ci, de manière à constituer un ensemble unique (le capteur 1) porté par le bras manipulateur 3. L'utilisation de deux caméras permet de réduire de façon importante le temps d'acquisition de la forme tridimensionnelle, mais n'est pas une caractéristique nécessaire de l'invention, le capteur pouvant ne comporter qu'une caméra.

Le capteur effectue un balayage de manière à acquérir la totalité de la forme de la pièce. Dans l'exemple illustré, ce balayage est un balayage en translation réalisé par déplacement du bras manipulateur 3 dans une direction (illustrée par la flèche 6) perpendiculaire au plan du faisceau lamellaire, typiquement avec une avance de 2 à 3 pas par seconde, chaque pas ayant une valeur de l'ordre de 0,1 à 0,5 mm selon la précision d'acquisition recherchée. La taille du pixel a une valeur brute typique de 50 $\mu$m x 50 $\mu$m, valeur pouvant être réduite par un traitement électronique de lissage à 20 $\mu$m x 20 $\mu$m.

On notera que, en variante, il est possible de réaliser le déplacement relatif capteur/pièce en déplaçant la pièce et en maintenant le capteur fixe, ou de prévoir un balayage par toute composition de translations et de rotations.

L'invention s'attache particulièrement à résoudre les problèmes optiques, notamment celui de la profondeur de champ, qui apparaissent lorsque le capteur est très proche de la pièce, c'est-à-dire lorsque le rapport d/x est élevé, d étant (figure 2) la profondeur du champ utile 7 et x étant la distance minimale entre le capteur et l'objet. On verra en particulier que ce rapport d/x peut atteindre des valeurs largement supérieures à 1, contre des valeurs de l'ordre de 0,1 à 0,2 dans les techniques connues employées jusqu'à présent.

Les figures 3 et 4 montrent la structure de la boîte à lumière 100 (sur la figure 4, on a isolé les seuls éléments optiques contribuant à la formation du faisceau).

Cette boîte à lumière comporte essentiellement une source laser 110, par exemple une diode laser émettant dans le visible un faisceau fin collimaté, cylindrique, avec une puissance de l'ordre de 3 mW. Ce faisceau frappe une lentille cylindrique 120 transformant le faisceau cylindrique mince en un faisceau plat (voir figure 4). Il est prévu des moyens 111 pour ajuster en abscisse et en ordonnée la position exacte de la source laser 110 de manière à centrer parfaitement le spot lumineux au milieu de la lentille cylindrique 120. Cette dernière comporte, quant à elle, des moyens de réglage fin en rotation (de l'ordre de ±5° ou ±10°) autour de son axe optique, afin de régler l'inclinaison du faisceau élargi (faisceau lamellaire) sur son axe.

Ce faisceau est envoyé, par l'intermédiaire d'un miroir de renvoi 130, vers un ensemble optique 140, caractéristique de l'invention, permettant d'allonger le trajet optique du faisceau, et que l'on va maintenant décrire en détail.

Cet ensemble 140 comporte tout d'abord un miroir ajustable 141 dirigeant le faisceau lamellaire produit par les éléments décrits précédemment vers un premier miroir 142 d'un ensemble de deux miroirs plans parallèles 142, 143. Par le phénomène bien connu des ≪ glaces parallèles ≫, il va se produire une pluralité de réflexions du faisceau, ce qui va allonger le trajet de celui-ci et, simultanément, accroître progressivement sa largeur, comme on peut le voir figure 4 (sur cette figure, le trait interrompu illustre le centre du faisceau lamellaire qui, pour des raisons de clarté de la figure, n'a été illustré qu'au début et à la fin de ses réflexions successives).

Après la dernière réflexion, le faisceau est capté par un miroir 144 qui le renvoie en direction d'une fenêtre 150 au sortir de laquelle il viendra frapper la pièce à analyser.

Le miroir ajustable 141 permet de régler le nombre de réflexions successives, en faisant varier l'angle de la première incidence du faisceau sur le miroir 142. Typiquement, on ajuste l'ensemble de manière à obtenir au moins quatre réflexions successives, ce nombre n'étant cependant en aucune façon limitatif.

Le miroir 144, quant à lui, permet d'ajuster la perpendicularité du faisceau en sortie de la boîte à lumière.

On notera incidemment que le faisceau lamellaire est généré de façon purement statique, sans aucun organe tel qu'un miroir mobile ou élément analogue, ce qui présente un grand nombre d'avantages : élimination du danger pour l'opérateur (l'énergie lumineuse étant étalée sur la largeur du faisceau au lieu d'être concentrée sur un spot mobile intense), absence d'organe mécanique fragile, pas de synchronisation à prévoir, grande précision (absence de vibrations, de déréglages, etc.).

Bien entendu, tous les miroirs utilisés dans cette boîte à lumière sont des miroirs rectifiés de qualité optique, et la boîte à lumière est hermétiquement close, de façon à empêcher toute passage de poussières ou de fumées dans le trajet du faisceau.

Dans un exemple de réalisation effectivement mise en oeuvre, la boîte à lumière a des dimensions l x h x L de 70 x 85 x 140 et produit, à une distance x = 100 mm de la pièce, un champ laser s'étendant sur d = 150 mm (avec les conventions de la figure 2). Le champ trapézoïdal 7 de la figure 2 a alors un petit côté de 65 mm et un grand côté de 95 mm. L'allongement du trajet optique permet d'avoir un recul virtuel de l'ordre de 1 m, distance à laquelle on règle la focalisation du faisceau laser. Le point exact de focalisation est situé environ au tiers inférieur du champ trapézoïdal, de façon à avoir approximativement la même épaisseur de faisceau en début et en fin de champ. On obtient ainsi, en début et en fin de champ, une épaisseur de faisceau de l'ordre de 0,3 mm, cette épaisseur descendant à 0,2 mm au point de focalisation : la profondeur de champ est donc excellente malgré le très faible recul physique du capteur et la très

grande étendue du champ laser.

On va maintenant décrire la partie détecteur du capteur.

La figure 5 montre, de façon schématique, la structure interne de chacun des deux détecteurs 200, qui comportent une glace d'entrée 210 située en vision directe de la trace laser formée par la rencontre du faisceau avec la pièce. L'image de cette trace est renvoyée, par un jeu de miroirs 221, 222 vers un bloc analyseur 230 transformant l'image en un signal électronique numérisé et traité par un ensemble de circuits désignés par la référence générale 240 avant d'être envoyé, via une liaison 250 vers un système informatique de traitement et de reconstitution de l'image. Chacun des détecteurs a par exemple des dimensions h x L x l de 100 x 100 x 70.

Le bloc 230, représenté plus en détail figure 6, comporte essentiellement un objectif 231 avec une lentille, un diaphragme et un filtre appropriés, placé devant un organe photoélectrique analyseur d'image 232 tel qu'un DTC (Dispositif à Transfert de Charges). Le réglage de la mise au point se fait par déplacement en translation de l'objectif 231 à l'intérieur de son tube 233 (flèche 234).

Selon un aspect particulier de la présente invention, le DTC (ou autre analyseur d'image) est monté basculant autour d'un axe 235 perpendiculaire à l'axe optique $\Delta$ ; le mouvement de bascule est illustré par la flèche 236.

Ce dispositif de bascule permet, comme illustré figure 7, de compenser les défauts de focalisation dus à la proximité du capteur et de l'objet. En effet, deux points A et B d'un objet situés au même niveau par rapport à l'horizontale vont produire des images en A' et B', respectivement, le point le plus éloigné A produisant une image en avant du plan focal normal P du capteur (c'est-à-dire le plan focal perpendiculaire à l'axe optique $\Delta$), le point le plus proche la produisant en arrière de ce même plan focal.

Le dispositif de bascule est destiné, précisément, à compenser cette anomalie en ramenant le DTC dans un plan P' contenant les points A' et B'. Cette compensation a pour effet d'accroître la profondeur de champ globale du système optique, puisque l'on compense le défaut de focalisation correspondant.

Pour une inclinaison a (figures 1 et 7) de l'axe optique de 45° par rapport à la verticale, la bascule optimale $\beta$ est de l'ordre de 7°, cette valeur dépendant en fait de la lentille, de la taille du DTC et de la dimension du champ et de divers autres paramètres.

Sur les figures 8 à 10, on a illustré un autre aspect de l'invention, relatif à l'analyse du signal délivré par le DTC 232.

La figure 8 montre, de façon schématique, le signal (analogique) vidéo V(t) délivré pour chaque ligne de balayage du DTC avec, entre deux impulsions de synchronisation, un signal dont l'amplitude varie en fonction de l'énergie lumineuse reçue ; ce signal représente, en fait, la trace du faisceau laser.

Le but du circuit est de déterminer, par rapport au début de la ligne, la position de la trace laser, c'est-à-dire celle du pic d'énergie correspondant à la trace (ou, en d'autres termes, la valeur $\sigma$ représentant le temps écoulé depuis l'impulsion de synchronisation de ligne du signal vidéo). La difficulté vient de ce que, en pratique, la trace ne se présente pas sous la forme d'un pic abrupt, mais présente un certain étalement dû à l'obliquité de l'incidence du faisceau par rapport à la pièce, aux phénomènes de diffraction, à des perturbations diverses, etc.

Plusieurs techniques ont été proposées pour déterminer de façon univoque la position correspondante de la trace.

On peut par exemple fixer un seuil T et décider que la position de la trace correspondra à l'instant situé à mi-chemin entre les deux instants de franchissements, respectivement dans un sens et dans l'autre, de ce seuil. Cette technique suppose cependant que l'étalement du signal est à peu près symétrique, et, d'autre part, est difficile à mettre en oeuvre en raison du caractère très variable du seuil à prévoir.

Une autre technique consiste à différencier le signal vidéo et à décider que la position de la trace correspond à l'inversion de signe du signal dérivé. Cette technique, comme dans le cas précédent, a pour inconvénient de présupposer que l'étalement du signal est sensiblement symétrique, et présente en outre l'inconvénient supplémentaire, propre à tout traitement de signal impliquant une différenciation, de venir amplifier les effets du bruit et des perturbations diverses.

L'invention propose de procéder par une autre technique, consistant essentiellement à intégrer le signal vidéo et à décider que la position de la trace correspond au milieu d'énergie du signal vidéo, c'est-à-dire à l'endroit pour lequel (cf. figure 10a) les aires $S_1$ et $S_2$ sont égales.

Cette technique a comme premier avantage de présenter une excellente immunité au bruit, du fait de l'intégration.

En outre, elle peut être mise en oeuvre par un circuit électronique analogique extrêmement simple, que l'on a illustré figure 9.

Ce circuit comprend essentiellement un étage intégrateur 241 recevant en entrée le signal vidéo V(t) (ligne (a) du chronogramme de la figure 10) et délivrant en sortie un signal intégré $S(t) = \int V(t)$ (l'intégrateur

est remis à zéro par l'impulsion de synchronisation de ligne du signal vidéo).

Ce signal S(t) est appliqué à deux branches distinctes 242 et 243. La branche 242 comporte un simple diviseur de tension délivrant en sortie un signal S(t)/2 d'amplitude moitié du signal S(t). La branche 243 comporte une ligne à retard, de préférence une ligne à retard programmable, retardant d'une durée $\tau$ le signal S(t), qui devient alors en sortie $S(t-\tau)$. Les deux signaux ainsi obtenus, qui sont illustrés respectivement sur les lignes (b) et (c) du chronogramme de la figure 10, sont alors appliqués aux deux entrées respectives d'un comparateur 244 qui va alors basculer à l'instant auquel (à $\tau$ près) $S(t)/2 = S(t-\tau)$, c'est-à-dire pour lequel les aires $S_1$ et $S_2$ sont égales. La ligne (d) du chronogramme de la figure 10 montre le signal $\Sigma$ (t) en sortie du comparateur 244.

Le retard $\tau$ de la ligne à retard 243 est choisi de manière à être au moins égal au plus large signal vidéo représentatif de la trace laser que l'on soit susceptible de rencontrer, c'est-à-dire qu'il doit être choisi en fonction de l'étalement maximal prévisible de la trace. En général, une valeur de 50 à 100 ns est satisfaisante à cet égard.

Il est également possible de mettre en oeuvre ce processus sous forme numérique, comme on va le décrire en référence aux figures 11 et 12.

Dans ce cas, le signal video analogique V(t), dont un exemple est donné figure 11a, est préalablement numérisé au moyen d'un convertisseur analogique/numérique 245, qui peut d'ailleurs être incorporé soit au capteur (ce qui autorise une plus grande immunité aux bruit), soit même à la caméra proprement dite, dans le cas d'un composant à sortie numérique directe.

Le signal numérique $B_i(t)$ obtenu, illustré figure 11b, se présente, pour chaque ligne vidéo, sous forme d'une série d'échantillons successifs de valeur $B_i$, la numérisation de cette valeur s'effectuant généralement sur 8 bits. Le premier échantillon non nul est le $P^{ième}$ et le dernier est le $Q^{ième}$. Le traitement consiste à rechercher, d'une part, quel est le $M^{ième}$ échantillon correspondant au milieu d'énergie du signal vidéo (c'est-à-dire l'endroit pour lequel les aires $S_1$ et $S_2$, après numérisation, sont égales) et, d'autre part, la position de ce milieu énergétique à l'intérieur du $M^{ième}$ échantillon, c'est-à-dire la valeur m, comprise entre 0 et 100%, représentée figure 11b.

Cette valeur m est déterminée de la manière suivante.

L'énergie totale $\Sigma$, c'est-à-dire la surface des aires hachurées I à IV sur la figure 11b, est :

$$\Sigma = \sum_{P}^{Q} B_i.$$

Si le milieu d'énergie se trouve sur l'échantillon de rang M (avec $P \leqq M \leqq Q$), on a alors la relation suivante, qui exprime que la surface des aires I + II est égale à la surface des aires III + IV :

$$\sum_{P}^{M-1} B_i. + m.B_M = (1-m).B_M + \sum_{M+1}^{Q} B_i,$$

ce qui, en d'autres termes, peut s'écrire :

$$m.B_M = \Sigma/2 - \sum_{P}^{M-1} B_i. \qquad (1)$$

À cet effet, le signal numérique $B_i$ en sortie du convertisseur 245 est appliqué à un registre accumulateur 241 (jouant le rôle de l'étage intégrateur portant la même référence dans la mise en oeuvre analogique), cet accumulateur étant un additionneur temps réel dont la valeur de sortie sera un signal d'énergie $\Sigma$ croissant au cours du temps (analogue au signal illustré figure 10b dans la version analogique). On notera que le séquencement des différentes opérations ne commence que lorsque l'on reçoit un échantillon non nul, c'est-à-dire le $P^{ième}$ échantillon, dont l'apparition en sortie du convertisseur 245 initialise

et déclenche un circuit séquenceur 246 assurant la commande temporelle des différents étages numériques du circuit.

Le signal d'énergie Σ en sortie de l'accumulateur 241 est appliqué, d'une part, à un diviseur par deux 242 pour donner un signal Σ/2 (dans cette variante numérique, la division par deux est obtenue par simple décalage d'un bit vers la droite, donc par un simple câblage approprié), et d'autre part, à un registre à décalage 243 faisant fonction d'étage retard. La taille de ce registre à décalage est choisie de manière à être au moins égale au plus grand nombre de pixels de la trace vidéo que l'on soit susceptible de rencontrer, afin de n'être jamais saturé.

sortie du diviseur 242 et celle du registre 243 sont appliquées aux deux entrées d'un circuit soustracteur 244 faisant fonction de comparateur : en effet, le résultat de la soustraction deviendra négatif dès que l'on aura :

$$m.B_M > \Sigma/2 - \sum_{P}^{M-1} B_i,$$

c'est-à-dire dès que l'on aura dépassé le point de milieu d'énergie.

En d'autres termes, on sait que, à cet instant (et au retard près introduit par le registre 243), on se situe exactement sur l'échantillon de rang M.

Ce basculement est détecté par un bit d'état S dont le changement de valeur indique que, en sortie du soustracteur 244, on dispose de la valeur :

$$\Sigma/2 - \sum_{P}^{M-1} B_i,$$

c est-à-dire de la valeur $m.B_M$ de l'équation (1).

La valeur $B_M$ est connue par ailleurs, par exemple en sortie d'un registre à décalage 248 de même taille que le registre 243 et recevant en entrée les échantillons successifs $B_i$.

Plutôt que de procéder à une division numérique pour obtenir la valeur recherchée m à partir du produit $m.B_M$ (l'autre valeur recherchée M, c'est-à-dire le rang de l'échantillon contenant le point de milieu d'énergie, étant donné directement par la logique de comptage du séquenceur 246), solution qui serait difficile et coûteuse à mettre en oeuvre en temps réel, on préfère utiliser une mémoire 247 de 64 Ko contenant les 256 valeurs possibles de m (chaque valeur étant codée sur un octet) en fonction de $m.B_M$, d'une part, et de $B_M$ d'autre part. Ces deux dernières informations, d'un octet chacune, sont appliquées aux entrées d'adresse $A_1$, $A_2$ de la mémoire 247.

Lors du basculement du circuit 244, on applique la valeur $m.B_M$ en sortie de ce circuit à l'entrée $A_1$, et la valeur $B_M$ à l'entrée $A_2$ : on obtient alors immédiatement et directement, sur la sortie de donnée D, la valeur m recherchée.

Comme on peut le voir, cette forme particulière de mise en oeuvre du circuit permet de calculer en temps réel la position du point de milieu d'énergie du signal vidéo et ce, avec une très grande précision (de l'ordre d'un dixième de pixel de résolution au moins).

**Revendications**

**1.** Un capteur optique de formes tridimensionnelles, comportant une source laser produisant un faisceau plan lamellaire (4) illuminant la surface d'un objet (2) de manière à produire sur ce dernier une trace lumineuse incidente (5) curviligne analysée par au moins une caméra vidéo produisant une information convertie en données numériques représentatives de coordonnées de pixels,

caractérisé par une boîte à lumière (100) comprenant, dans un même boîtier placé au-dessus de l'objet à analyser et à faible distance de celui-ci :

- ladite source laser (110), produisant un faisceau rectiligne collimaté,
- des moyens optiques (120) pour transformer ce faisceau rectiligne en un faisceau plan lamellaire, et

- des moyens d'allongement du trajet optique du faisceau (140), comprenant deux miroirs plans fixes (142, 143), disposés en vis-à-vis de manière à produire une pluralité de réflexions entre un point d'entrée (141) et un point de sortie (144) du faisceau,

de manière à compenser le faible recul matériel entre le boîtier et l'objet par un recul optique virtuel et accroître ainsi corrélativement la profondeur de champ de la région utile (7) du faisceau plan lamellaire en sortie du boîtier.

**2.** Le capteur de la revendication 1, dans lequel les points d'entrée et de sortie (141, 144) comprennent des moyens optiques de réglage d'incidence de faisceau, de manière à ajuster le nombre de réflexions entre les deux miroirs en vis-à-vis.

**3.** Le capteur de la revendication 1, dans lequel les moyens optiques (120) pour transformer le faisceau rectiligne en un faisceau plan lamellaire sont des moyens statiques.

**4.** Le capteur de la revendication 1, comprenant en outre au moins un bloc détecteur (200) attenant à la boîte à lumière et pourvu d'un organe photoélectrique analyseur d'image (232) et de moyens formant objectif (231), placés devant cet organe analyseur d'image.

**5.** Le capteur de la revendication 4, comprenant en outre des moyens de bascule relative de l'organe analyseur d'image par rapport aux moyens formant objectif.

**6.** Le capteur de la revendication 4, comportant en outre un circuit électronique d'extraction de l'information représentative de la position de la trace du faisceau laser sur chaque ligne d'image délivrée par l'organe analyseur d'image, ce circuit comprenant :

- un étage intégrateur (241), recevant en entrée un signal électrique représentatif de l'intensité lumineuse reçue, variant en fonction de la position considérée sur la ligne analysée, et délivrant en sortie un signal, croissant, représentatif de l'énergie lumineuse cumulée reçue,
- un étage diviseur (242), recevant en entrée le signal d'énergie délivré par l'étage intégrateur,
- un étage à retard (243), recevant en entrée le signal d'énergie délivré par l'étage intégrateur, et
- un étage comparateur (244), recevant sur chacune de ses entrées les signaux de sortie respectifs de l'étage diviseur et de l'étage à retard, le basculement de cet étage comparateur définissant, au cours du balayage de la ligne d'image, la position du milieu de la trace du faisceau laser.

## Claims

**1.** An optical sensor for three-dimensional shapes, comprising a laser source producing a plane lamellar beam (4) illuminating the surface of an object (2) in such a manner as to produce on the said object a luminous incident curved path (5) analysed by at least one video camera producing information converted into numerical data representative of pixel coordinates, **characterized by** a light box (100) comprising, in the same casing positioned above the object to be analysed and at a short distance therefrom:

- the said laser source (110), producing a collimated rectilinear beam;
- optical means (120) to convert the said rectilinear beam into a plane lamellar beam; and
- means for extending the optical path of the beam (140) comprising two fixed plane mirrors (142, 143) arranged opposite one another in such a manner as to produce a plurality of reflections between an entry point (141) and an exit point (144) of the beam;

in such a manner as to counterbalance the low physical distance between the casing and the object, by a virtual optical distance, and thus correlatively to increase the depth of field of the effective region (7) of the plane lamellar beam leaving the casing.

**2.** A sensor in accordance with claim 1, wherein the entry and exit points (141, 144) comprise optical means for controlling the incidence of the beam, in such a manner as to adjust the number of reflections between the two opposite mirrors.

**3.** A sensor in accordance with claim 1, wherein the optical means (120) to convert the rectilinear beam into a plane lamellar beam are static means.

4. A sensor in accordance with claim 1, additionally comprising at least one detector block (200) abutting the light box and provided with an image-analysing photoelectric body (232) and means forming a lens (231) positioned in front of the said image-analysing body.

5. A sensor in accordance with claim 4, additionally comprising means for relative tilting of the image-analysing body in relation to the means forming the lens.

6. A sensor in accordance with claim 4, additionally comprising an electronic circuit to extract the information representing the position of the laser beam path on each line of the image delivered by the image-analysing body, the said circuit comprising:
   - an integration stage (241) receiving at the point of entry an electric signal representative of the intensity of light received, varying according to the position being considered on the analysed line, and delivering at the exit an increasing signal representative of the accumulated luminous energy received;
   - a dividing stage (242) receiving at the point of entry the energy signal delivered by the integration stage;
   - a delay stage (243) receiving at the point of entry the energy signal delivered by the integration stage; and
   - a comparison stage (244) receiving at each of its points of entry the respective exit signals from the dividing stage and the delay stage, the switching of the said comparison stage defining the position of the centre of the laser beam path, during scanning of the line of the image.

**Patentansprüche**

1. Optischer Sensor für dreidimensionale Formen, der eine Laserquelle umfaßt, welche ein ebenes, lamelliertes Strahlenbündel (4) erzeugt, das die Oberfläche eines Objektes (2) derart beleuchtet, daß auf dem Objekt eine einfallende, krummlinige Leuchtspur (5) erzeugt wird, die durch mindestens eine Videokamera analysiert wird, die digitale Daten erzeugt, welche für Pixelkoordinaten repräsentativ sind, gekennzeichnet durch einen Lichtkasten (100), der in demselben Gehäuse, welches oberhalb des zu analysierenden Objektes und in geringer Entfernung desselben angebracht ist, folgendes umfaßt:
   - die Laserquelle (110), die ein durch Blenden geformtes, geradliniges Strahlenbündel erzeugt,
   - optische Mittel (120), um dieses blandengeformte, geradlinige Strahlenbündel, in ein ebenes, lamelliertes Strahlenbündel umzuwandeln, und
   - Mittel zur Verlängerung des optischen Weges des Strahlenbündels (140), die zwei feststehende, ebene Spiegel (142, 143) umfassen, die derart gegenüberliegend angebracht sind, daß eine Vielzahl von Spiegelungen zwischen einem Eingangspunkt (141) und einem Ausgangspunkt (144) des Strahlenbündels erzeugt werden,

   mit dem Zweck, den geringen physischen Abstand zwischen Gehäuse und Objekt zu kompensieren und somit entsprechend die Schärfentiefe des nutzbaren Bereichs (7) des ebenen, lamellierten, aus dem Gehäuse kommenden Strahlenbündels zu erhöhen.

2. Der Sensor aus Anspruch 1, bei welchem die Ein- und Ausgangspunkte (141, 144) optische Mittel für die Einstellung des Einfalls des Strahlenbündels umfassen, um die Zahl der Spiegelungen zwischen den zwei gegenüberliegenden Spiegeln einzustellen.

3. Der Sensor aus Anspruch 1, wobei es sich bei den optischen Mitteln (120) zum Umwandeln des geradlinigen Strahlenbündels in ein ebenes, lamelliertes Strahlenbündel, um statische Mittel handelt.

4. Der Sensor aus Anspruch 1, der zudem mindestens einen Detektorblock (200) umfaßt, der neben dem Lichtkasten liegt und über ein photoelektrisches Bildanalysenorgan (232) sowie über Mittel, die ein Objektiv bilden (231) und vor diesem Bildanalysenorgan angebracht sind, verfügt.

5. Der Sensor aus Anspruch 4, der zudem über Mittel zum relativen Kippen des Bildanalysenorgans gegenüber den Mitteln, die das Objektiv bilden, verfügt.

6. Der Sensor aus Anspruch 4, der zudem über einen elektronischen Schaltkreis zum Extrahieren der repräsentativen Information für die Lage der Spur des Laserstrahlenbündels auf jede durch das Bildanalysenorgan gelieferte Bildlinie verfügt, wobei der Schaltkreis umfaßt:

- eine Integratorstufe (241), die an ihrem Eingang ein elektrisches Signal empfängt, welches repräsentativ für die empfangene Lichtstärke ist und als Funktion der auf der analysierten Linie berücksichtigten Position variiert, und an seinem Ausgang ein für die empfangene, kumulierte Lichtintensität repräsentatives zunehmendes Signal herausgibt,
- eine Teilungsstufe (242), die an ihrem Eingang das durch die Integratorstufe abgegebene Energiesignal empfängt,
- eine Verzögerungsstufe (243), die am Eingang das durch die Integratorstufe abgegebene Energiesignal empfängt,
- eine Vergleichsstufe (244), die an jedem ihrer Eingänge die entsprechenden Ausgangssignale der Teilungsstufe und der Verzögerungsstufe empfängt, wobei das Kippen dieser Vergleichsstufe im Verlauf der Abtastung der Bildlinie, die Lage des Mittelpunkts der Spur des Laserstrahlenbündels definiert.

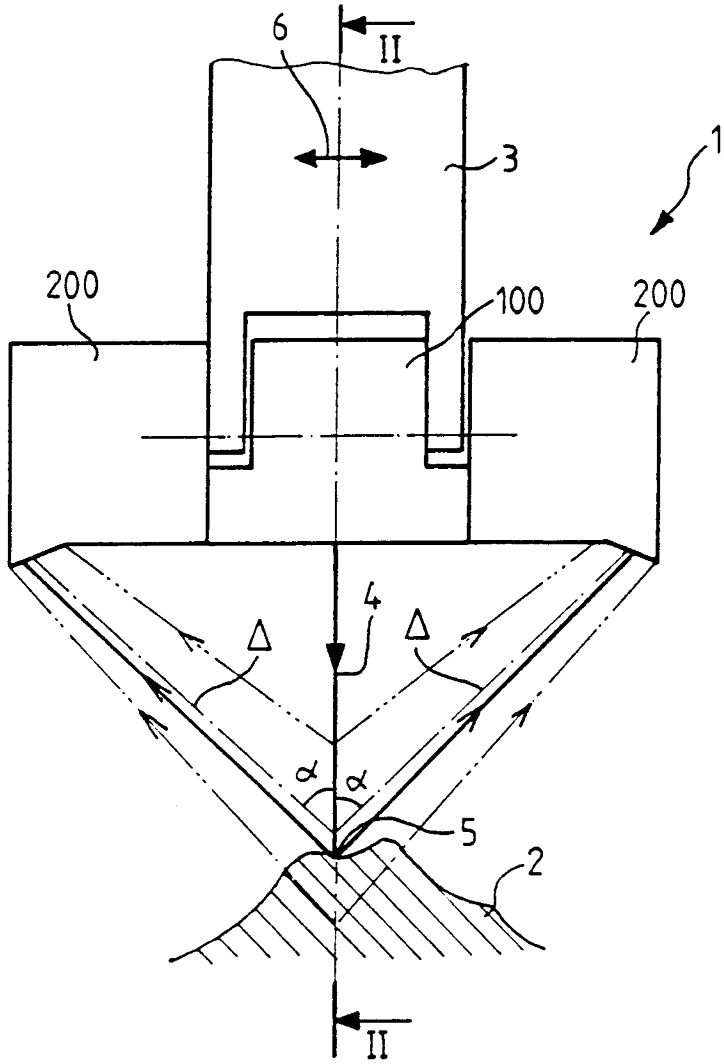


FIG_1

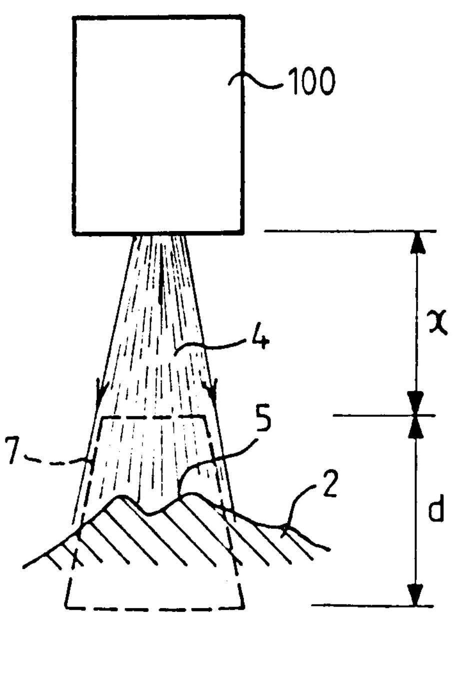


FIG_2

FIG_3

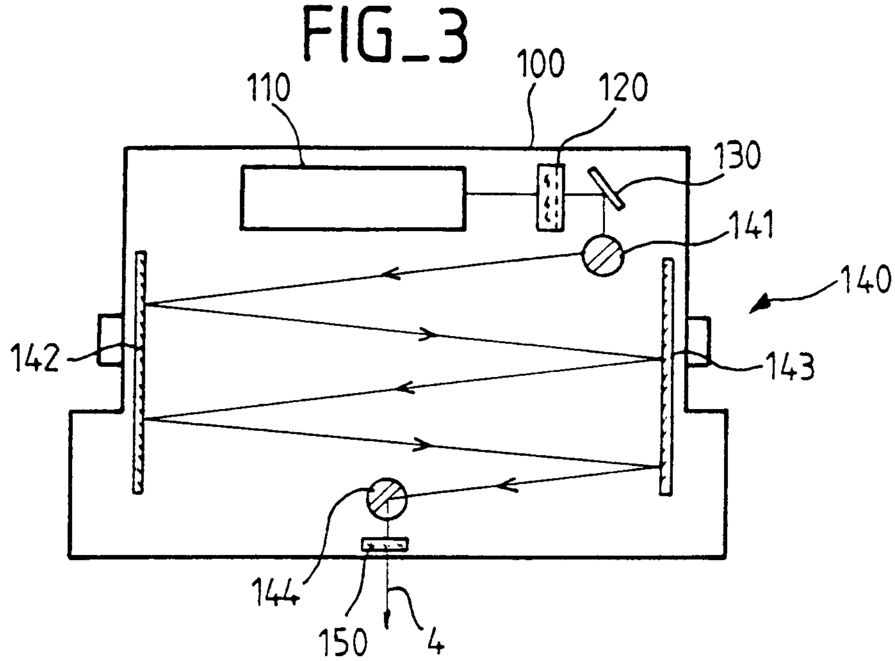
110
100
120
130
141
140
142
143
144
150
4

FIG_4

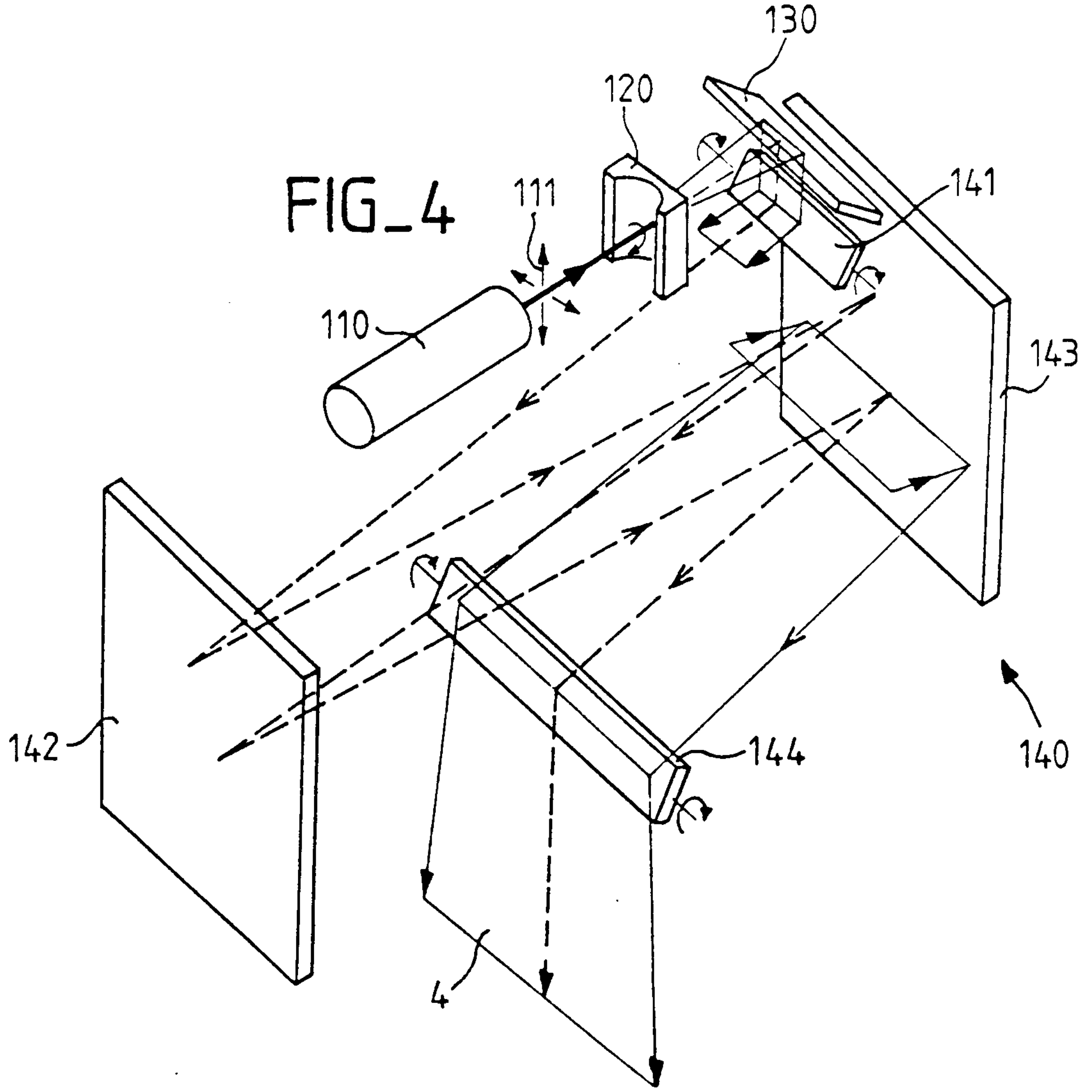
130
120
111
141
110
143
142
144
140
4

FIG_5

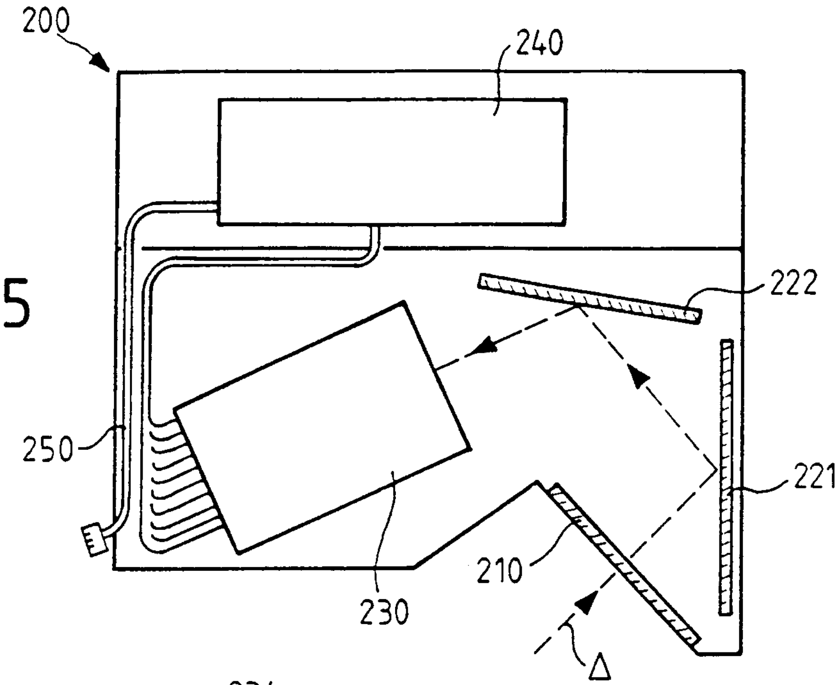


FIG_6

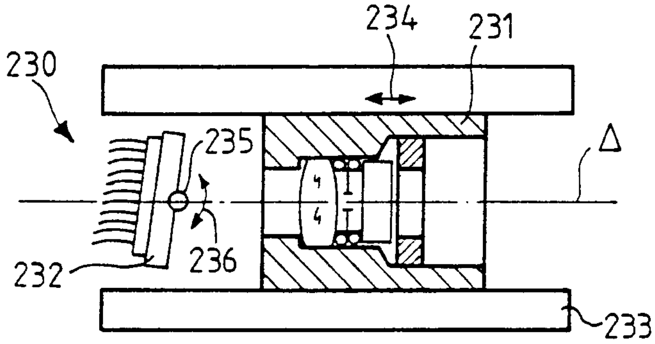


FIG_7

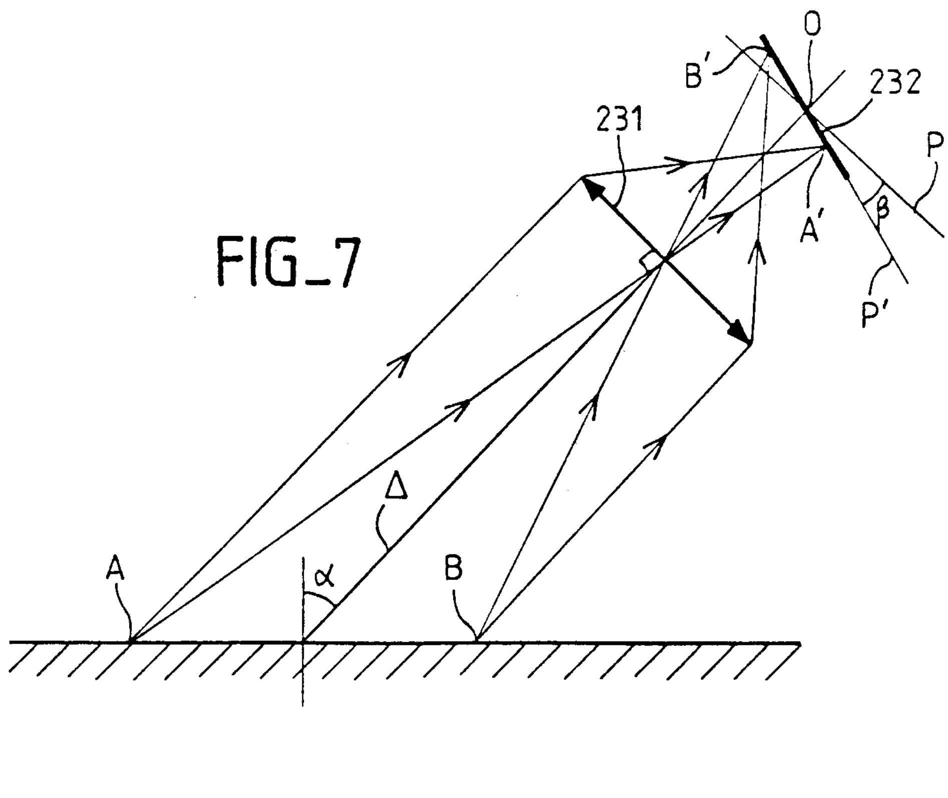

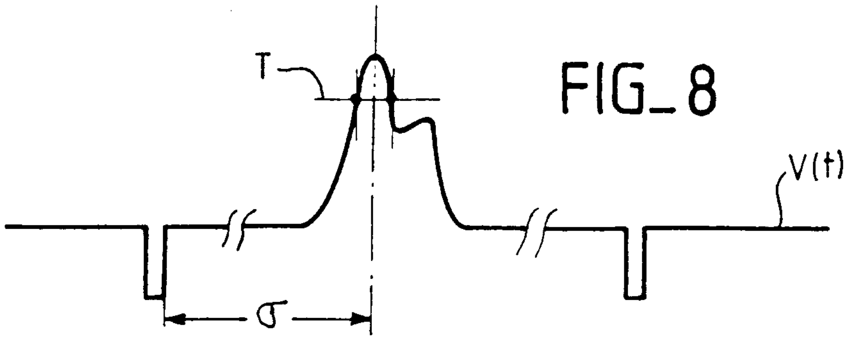


FIG_8

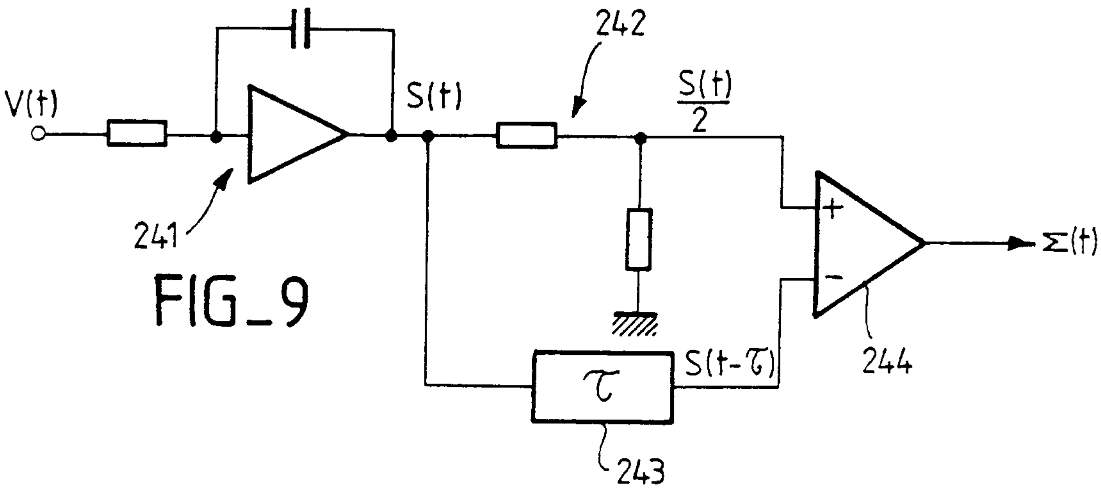


FIG_9

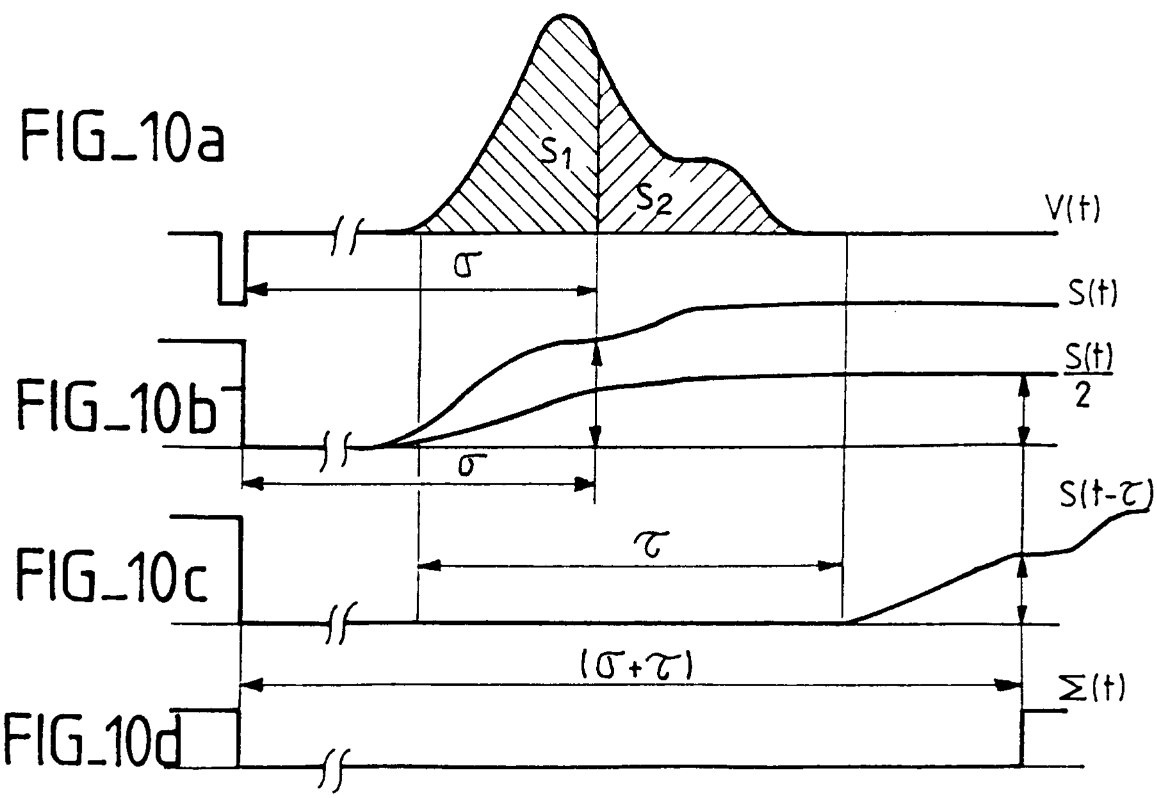


FIG_10a

FIG_10b

FIG_10c

FIG_10d

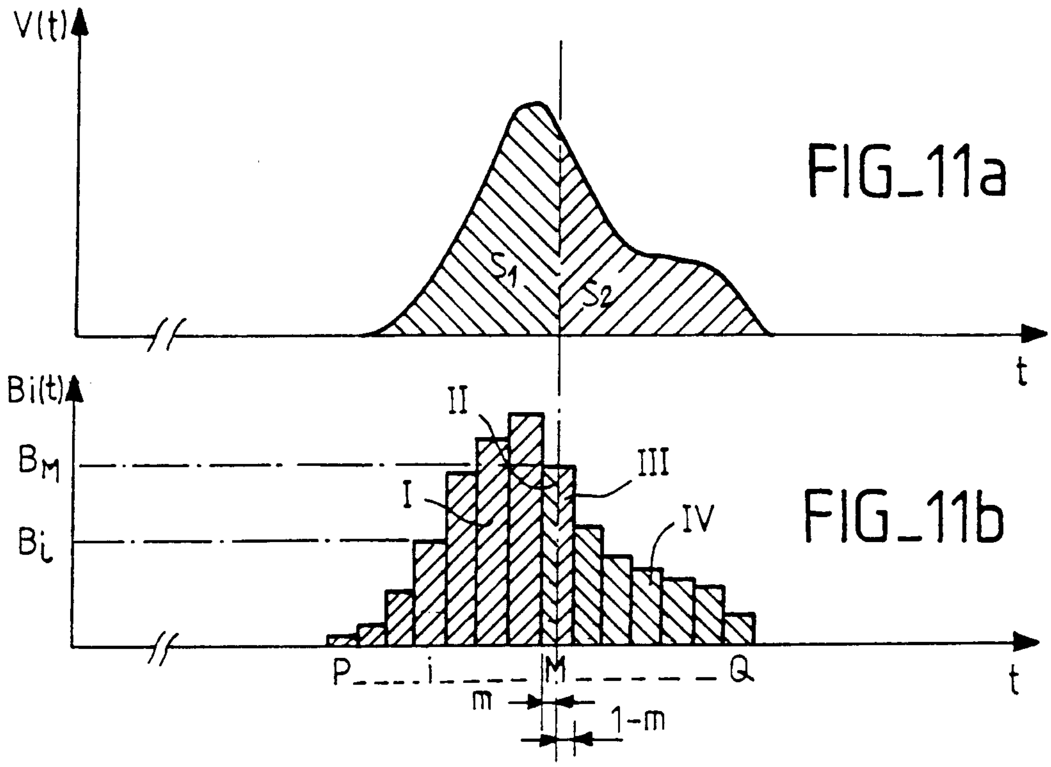


FIG_11a

FIG_11b

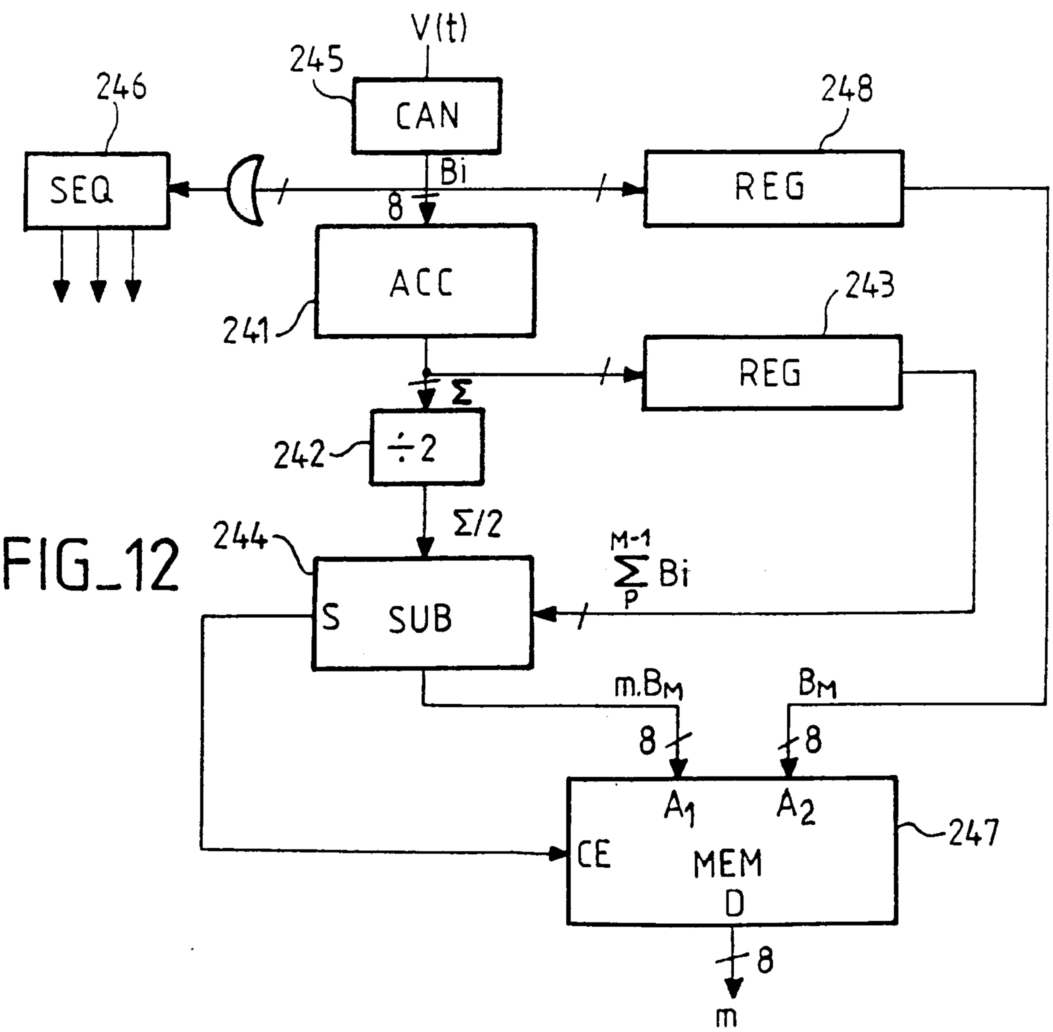


FIG_12